# EUROPEAN PATENT SPECIFICATION

(11) **EP 2 476 986 B1**
(45) Date of publication and mention of the grant of the patent: **19.04.2017**
(21) Application number: 11425007.9
(22) Date of filing: 17.01.2011
(51) Int. Cl.: F28D 7/16, F24H 1/00

(54) **Heat exchanger with highly flexible use**
Wärmetauscher mit äußerst vielseitiger Verwendung
Échangeur de chaleur avec une utilisation très souple

(43) Date of publication of application: 18.07.2012
(73) Proprietor: UNICAL AG S.p.A., 46033 Castel d'Ario (MN) (IT)
(72) Inventor: Angiolini, Gian-Luca, 29122 Piacenza (IT)
(74) Representative: Modiano, Micaela Nadia

(56) References cited:
- EP-A1- 1 703 244
- EP-A2- 2 175 221
- WO-A1-2007/062939
- WO-A1-2009/053248
- WO-A2-2009/003817
- DE-B3-102005 045 103
- DE-U1- 29 604 521
- FR-A1- 2 907 889
- US-B1- 6 647 932

## Description

The present invention relates to a heat exchanger with highly flexible use.

Nowadays heat exchangers are known which are adopted in boilers designed to heat a fluid which is generally constituted by water or diathermic oil.

Such heat exchangers are generally constituted by a monolithic box-like structure which is often made of aluminum and is such as to define inside it at least one heat exchange chamber that can be crossed by hot combustion gases.

The duct for feeding the fluid to be heated, which by convection and conduction absorbs the heat carried by the combustion gases, is provided in the side walls of such box-like structure.

In order to improve the thermal efficiency of such heat exchangers, it is known to provide inside the heat exchange chamber a plurality of solid pins, which are integral with the box-like structure and are adapted to increase the surface for heat exchange between the burned gases and the inside walls of the box-like structure. Heat exchangers employing heat transfer solid pins of this conventional type are known from US 6 647 932 B1 and WO 2009/053248 A1. Document US 6 647 932 B1 shows all the features of the preamble of claim 1.

A known evolution of such solid pins consists in making them hollow and in making the fluid to be heated pass through them. This last solution is such as to further increase the thermal efficiency of the exchanger but suffers the drawback that, in order to provide the hollow pins, such pins must have a large cross-section so as to allow circulation of the fluid to be heated inside them.

This fact leads to an increase in the dimensions of the voids between one pin and the next, thus allowing the combustion gases to pass through the heat exchange chamber without adequately flowing over the pins that are present inside it.

In practice, this increase in size does not allow optimum utilization of the heat of the combustion gases that circulate in the heat exchanger.

In the particular case in which the heat exchanger is adopted in condensation gas boilers, the exchanger is provided with a burner located at the upper head of the heat exchanger and the combustion products are conveyed into a portion of space that extends from the head to the bottom of the exchanger, where a duct for evacuation to the flue is provided.

Such conventional heat exchangers are not devoid of drawbacks, which include the fact that, depending on the design specifications and therefore on the boiler in which installation is to occur, they must be sized appropriately and obtained by providing a dedicated manufacturing process for each type of heat exchanger manufactured, with an obvious economical impact.

More specifically, this drawback is felt even more strongly when it is not possible to achieve economies of scale during manufacture, i.e., when the number of heat exchangers to be manufactured is limited to a few units and, especially, when the design specifications have particular nonstandard requirements.

Among the variables to be considered during the design of a heat exchanger, in addition to a simple size factor which is correlated to the space occupation and spaces available inside the boiler, and to the thermal power to be exchanged, the desired number of burners and the number of heat exchange chambers can be particularly important, for example if one wishes to obtain a heat exchanger with exchangeable thermal power that is variable.

Another drawback of conventional exchangers, such as disclosed in WO 2009/003817 A2, consists in that, since they are generally provided by means of a monolithic structure obtained by casting, the provision of the internal hollow pins is an operation which is difficult and expensive to perform.

The aim of the present invention is to provide a heat exchanger with highly flexible use which solves and overcomes, respectively, the above mentioned drawbacks and limitations of conventional heat exchangers.

Within this aim, an object of the present invention is to provide a heat exchanger with highly flexible use which, thanks to its particular constructive characteristics, is capable of giving the greatest assurances of reliability and safety in use.

Another object of the present invention is to provide a heat exchanger with highly flexible use that is competitive from a merely economical standpoint.

In accordance with the invention, there is provided a heat exchanger as defined in the appended claims.

Further characteristics and advantages will become better apparent from the description of four preferred, but not exclusive, embodiments of a heat exchanger with highly flexible use, illustrated by way of non-limiting example in the accompanying drawings, wherein:
Figure 1 is a perspective view of a first embodiment of a heat exchanger with highly flexible use, according to the invention;
Figure 2 is an exploded perspective view of the heat exchanger shown in Figure 1;
Figure 3 is a perspective view of a component of the heat exchanger shown in Figure 1;
Figure 4 is a partially cutaway perspective view of the component shown in Figure 3;
Figure 5 is a plan view from above of the heat exchanger shown in Figure 1;
Figure 6 is a sectional view of the heat exchanger shown in Figure 5, taken along the line VI-VI;
Figure 7 is a sectional view of the heat exchanger shown in Figure 5, taken along the line VII-VII;
Figure 8 is a sectional view of a variation of the heat exchanger shown in Figure 5, taken along the line VI-VI;
Figure 9 is a perspective view of a second embodiment of a heat exchanger with highly flexible use, according to the invention;
Figure 10 is an exploded perspective view of the heat exchanger shown in Figure 9;
Figure 11 is a perspective view of a component of the heat exchanger shown in Figure 9;
Figure 12 is a plan view from above of the heat exchanger shown in Figure 9;
Figure 13 is a sectional view of the heat exchanger shown in Figure 12, taken along the line XIII-XIII;
Figure 14 is a sectional view of the heat exchanger shown in Figure 12, taken along the line XIV-XIV;
Figure 15 is a sectional view of a variation of the heat exchanger shown in Figure 12, taken along the line XIV-XIV;
Figure 16 is an exploded perspective view of a third embodiment of a heat exchanger with highly flexible use, according to the invention;
Figure 17 is a plan view from above of the heat exchanger shown in Figure 16;
Figure 18 is a sectional view of the heat exchanger shown in Figure 17, taken along the line XVIII-XVIII;
Figure 19 is a sectional view of the heat exchanger shown in Figure 17, taken along the line XIX-XIX;

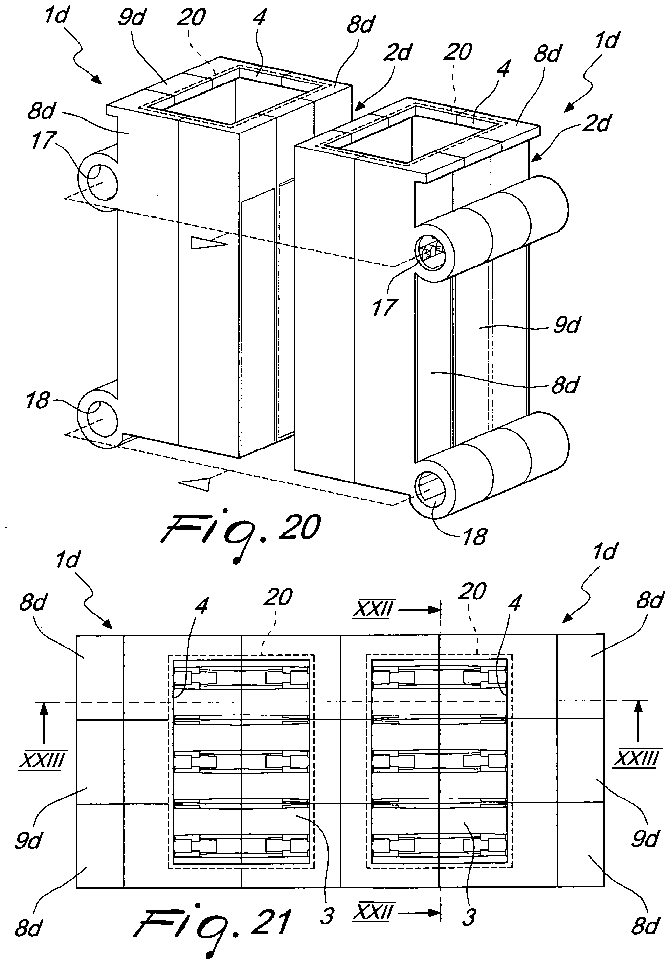

Figure 20 is an exploded perspective view of a fourth embodiment of two heat exchangers with highly flexible use, according to the invention;
Figure 21 is a plan view from above of the heat exchanger shown in Figure 20;
Figure 22 is a sectional view of one of the two heat exchangers shown in Figure 21, taken along the line XXII-XXII;
Figure 23 is a sectional view of the two heat exchangers shown in Figure 21, taken along the line XXIII-XXIII;
Figures 24 and 25 are two perspective views of a plurality of heat exchangers such as the ones shown in Figure 20 and composed together according to an embodiment of the invention.

With reference to the figures, the heat exchanger with highly flexible use, generally designated in the four embodiments by the reference numeral 1 followed by the subscripts "a", "b", "c" and "d" in order to identify in sequence the four proposed embodiments, generally comprises a box-like body 2a, 2b, 2c and 2d, which delimits inside it at least one heat exchange chamber 3 and has at least one inlet 4 and at least one outlet 5 for the passage through the heat exchange chamber 3 of combustion products along a preferred path which, once installed, is substantially and preferably parallel to the vertical direction.

In greater detail, as will be described further hereinafter, each box-like body 2a, 2b, 2c and 2d defines, in its side walls, at least one duct for feeding a fluid to be heated, and inside the heat exchange chamber 3 heat exchange elements 7 are provided which are associated with the supply duct in order to increase the thermal efficiency of the heat exchanger 1a, 1b, 1c or 1d, by increasing the heat exchange surface.

According to the invention, there is a plurality of distinct modular elements which are mutually interconnected in order to define the box-like body 2a, 2b, 2c and 2d.

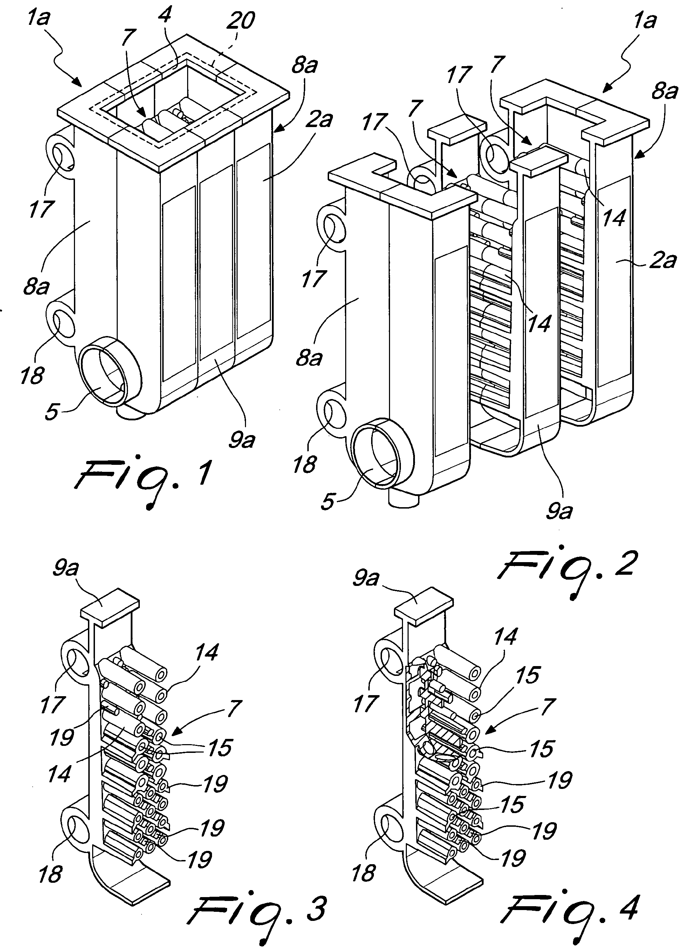

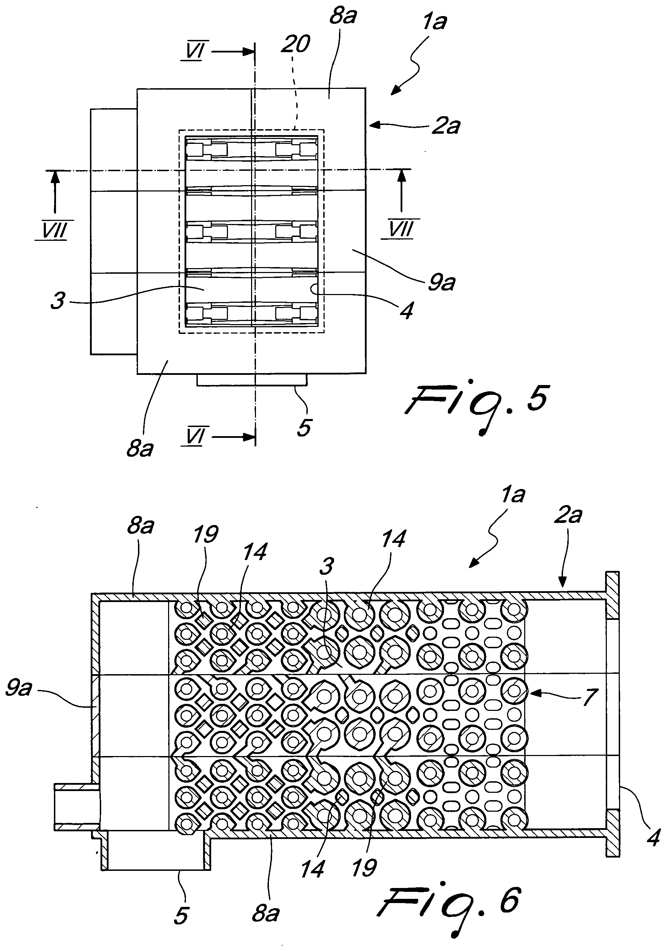

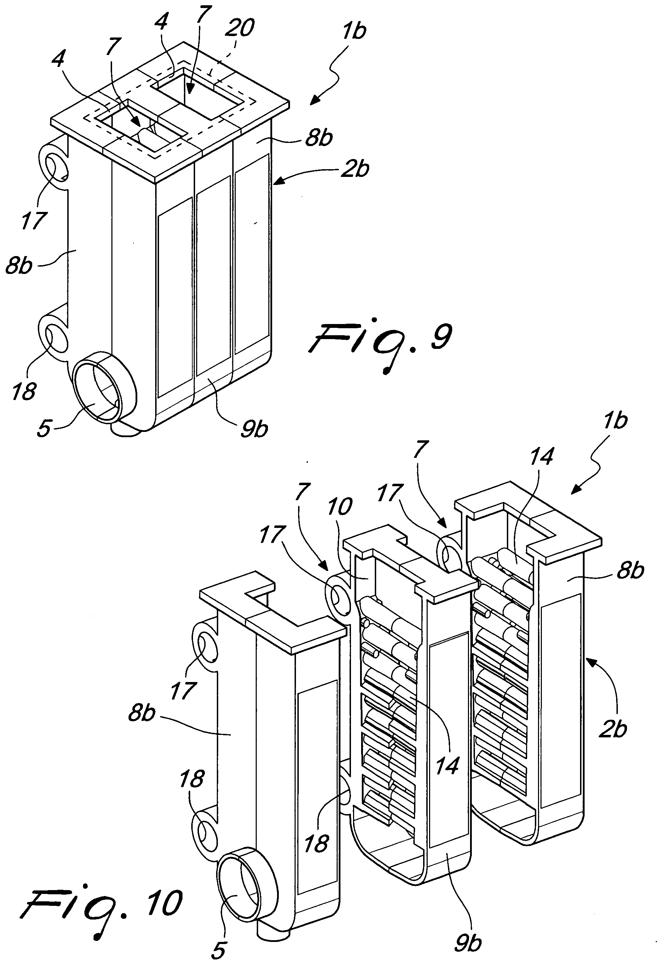

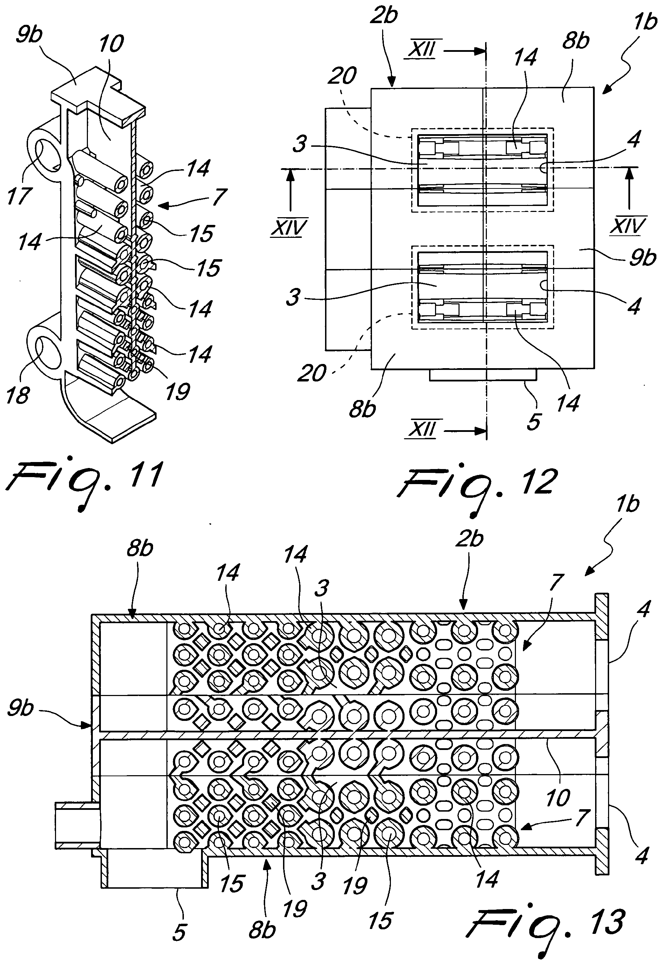

With reference to the first and second embodiments, shown respectively in Figures 1 to 8 and in Figures 9 to 15, the heat exchangers 1a and 1b comprise two modular end elements 8a or 8b which are mutually distinct and mutually associable.

More precisely, an additional modular element 9a or 9b is interposed between each pair of modular end elements 8a or 8b.

Depending on the design specifications, for example depending on the thermal power required for the heat exchanger and on the intended space occupations, it is possible to provide a plurality of additional modular elements 9a or 9b, which are thus interposed between one of the modular end elements 8a or 8b and another additional modular element 9a or 9b or between two other additional modular elements 9a or 9b.

Moreover, in order to simplify the operations for forming said modular elements, each one is provided by two distinct and mutually interconnected half-elements.

With reference to the first embodiment, the additional modular element 9a of the heat exchanger 1a does not have partitions, so as to define, with the modular end elements 8a, a single heat exchange chamber 3 with a single inlet 4 and a single evacuation duct which ends with the outlet 5.

Differently, in the second embodiment each additional modular element 9b of the heat exchanger 1b has a partition 10 which is such as to divide the inner volume of the heat exchanger 1b into a plurality of heat exchange chambers 3, one for each pair of modular elements.

More specifically, in this embodiment each heat exchange chamber 3 is independent of the other heat exchange chambers 3, it being delimited laterally by a pair of modular elements, and has a dedicated inlet 4. Despite this, the heat exchange chambers 3 are connected to a single evacuation duct which ends with the outlet 5.

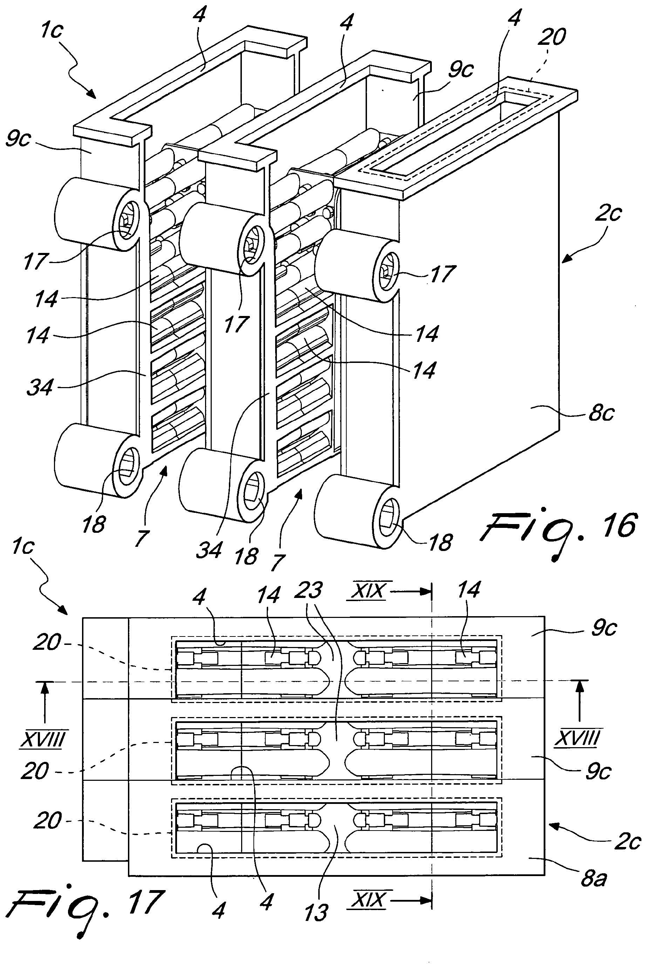

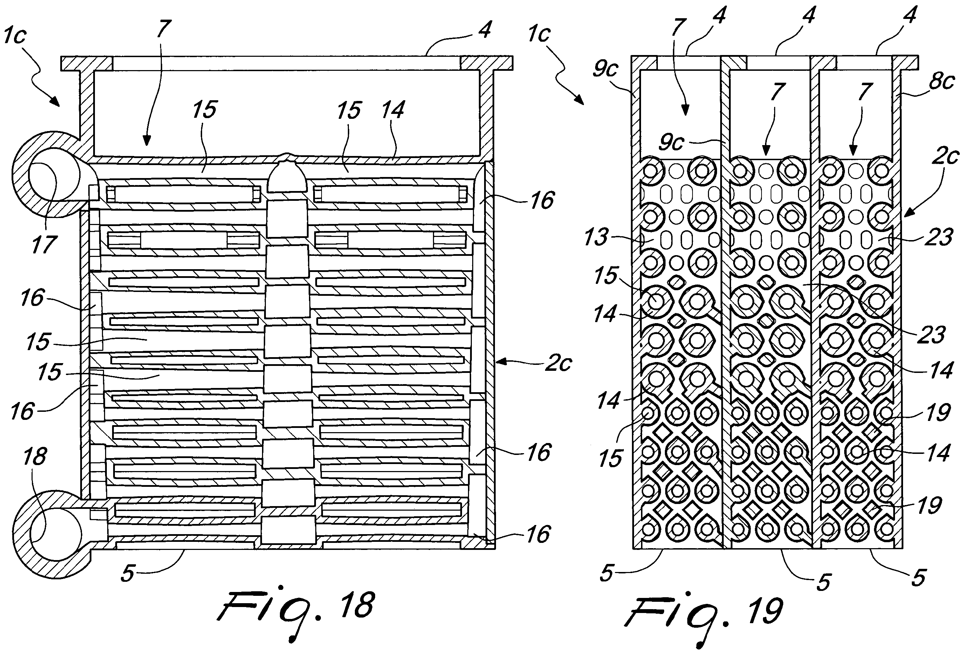

With reference to the third embodiment, shown in Figures 16 to 19, the heat exchanger 1c in its minimum configuration can comprise a single modular end element 8c with a closed profile, which is provided in a monolithic structure and delimits inside it a first heat exchange chamber 3 which is provided with a single inlet 4 and with a single outlet 5.

Advantageously, in this embodiment, in order to increase the thermal power that can be exchanged by the heat exchanger 1c, one or more additional modular elements 9c are provided which can be mutually associated laterally with the modular end element 8c or with another additional modular element 9c along at least one first plane which is substantially parallel to the vertical direction.

Each additional modular element 9c has an open profile with a face 34 which is open in order to delimit inside it a second heat exchange chamber 23 and in order to define a dedicated inlet 4 when associated with the modular end element 8c or with another additional modular element 9c.

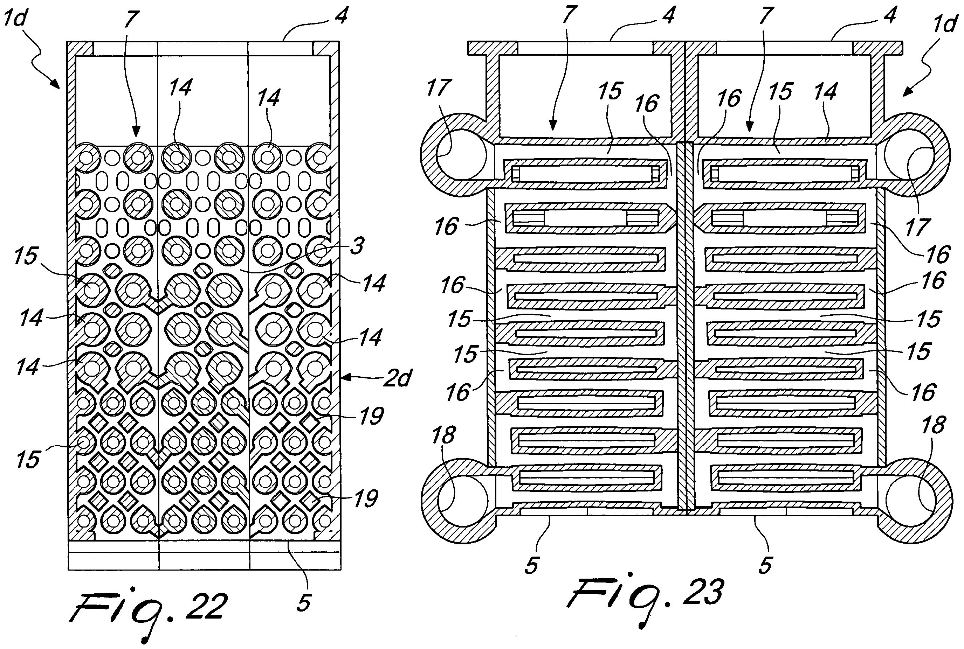

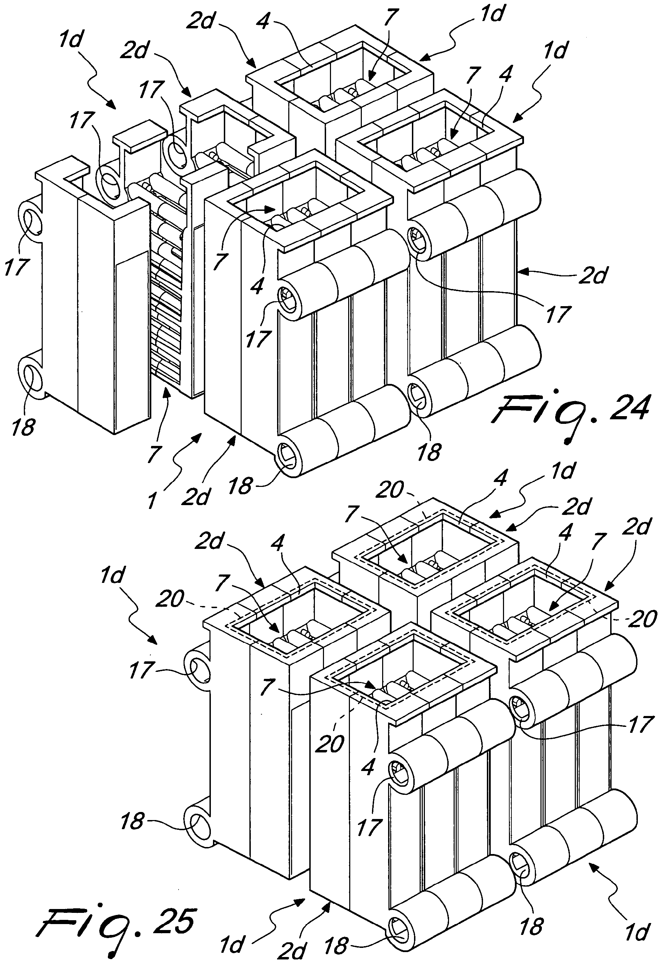

With reference to the fourth embodiment, shown in Figures 22 to 25, the heat exchanger 1d is structured similarly to the heat exchanger 1a of the first embodiment.

The heat exchanger 1d in fact comprises two modular end elements 8d, which are distinct and mutually associable.

More precisely, one or more additional modular elements 9d are interposed between the modular end elements 8d.

Depending on the design specifications, for example depending on the thermal power required for the heat exchanger and on the intended space occupations, it is possible to provide a plurality of additional modular elements 9d, which are thus interposed between one of the modular end elements 8d and another additional modular element 9d or between two other additional modular elements 9d.

Moreover, in order to simplify the operations for forming the modular elements, in this embodiment as well, each one of these modular elements is provided by two distinct half-elements which are mutually interconnected along a second plane which is substantially parallel to the vertical direction and is substantially perpendicular to the interface plane between one modular element and the next.

The peculiarity of the heat exchanger 1d consists in that it can be assembled as a module together with other heat exchangers 1d of the same type in order to provide a large heat exchange station in which the fluid to be heated passes through all the heat exchangers 1d provided.

With reference to all four proposed embodiments, advantageously each modular element comprises at least one portion of the heat exchange elements 7 and at least one portion of the heat exchange chamber 3, 13 or 23 in order to obtain a heat exchanger 1a, 1b, 1c or 1d having different dimensions and technical characteristics according to the requirements.

More specifically, the heat exchange elements 7 comprise hollow pins 14, which extend through the heat exchange chamber or chambers 3 with a cross-section that is, for example, diamond-shaped or the like. The hollow pins 14 run parallel to each other and substantially at right angles to the vertical direction.

Moreover, the hollow pins 14 can be crossed internally by the fluid to be heated since they are an integral part of a winding channel which is defined inside each modular element.

More precisely, the winding channel extends substantially along the direction of crossing of the combustion products and comprises a plurality of straight portions 15 and of curvilinear portions 16 which are mutually interleaved and are defined respectively by the hollow pins 14 and by the side walls of the box-like body 2a, 2b, 2c or 2d.

As can clearly be seen from the figures, for the first three embodiments the winding channel of an individual modular element is defined partly by one of the half-elements and partly by the other half-element.

Moreover, each one of the winding channels is connected at one end to a manifold 17 for the delivery of the fluid to be heated and, at the other end, to a manifold 18 for the return of the fluid to be heated, both manifolds being defined by the same modular element.

As a consequence of the assembly of the several modular elements of the heat exchanger 1a, 1b, 1c or 1d, each delivery manifold 17 and each return manifold 18 is connected respectively to the delivery manifold 17 and to the return manifold 18 of the adjacent modular element, so as to mutually connect the winding channels in parallel to each other.

In this manner, the set of winding ducts, i.e. of the straight portions 15 and of the curvilinear portions 16, of the delivery manifolds 17 and of the return manifolds 18, define the previously mentioned supply duct.

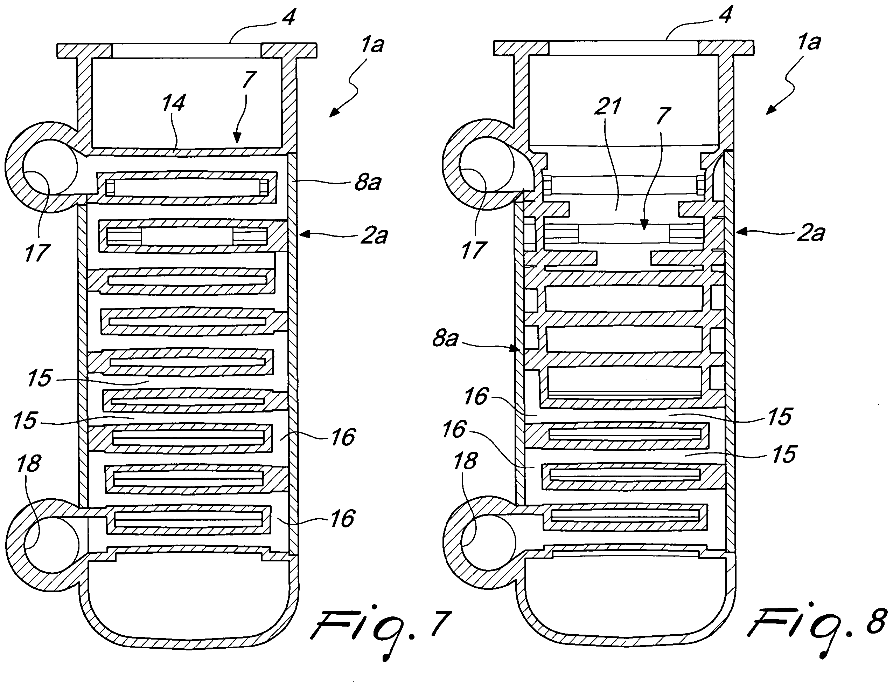

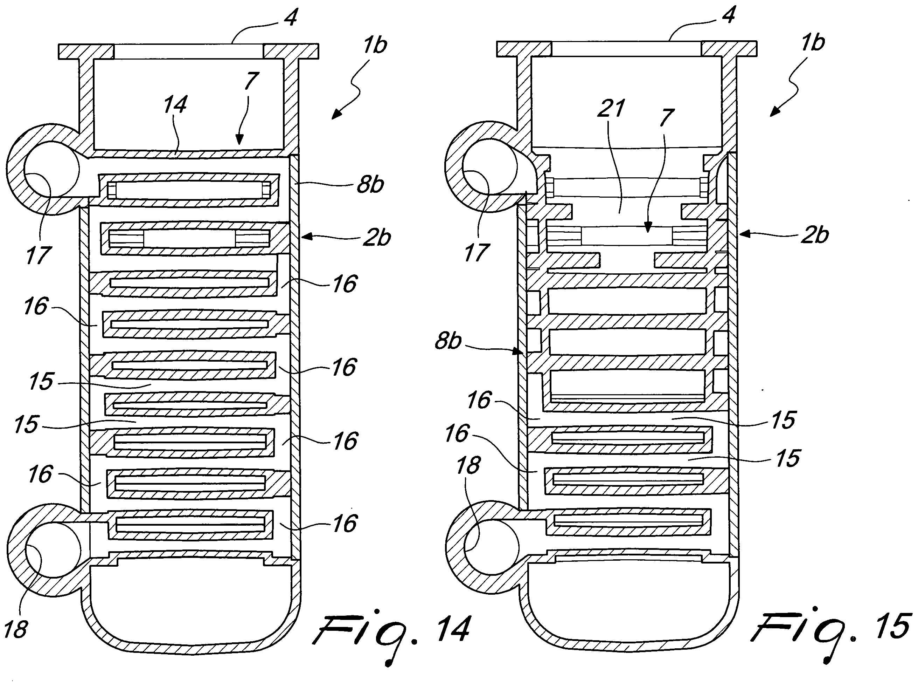

Moreover, since each one of the inlets 4 is designed to accommodate at least one burner 20, shown schematically in dashed lines, the hollow pins 14, which cross the corresponding heat exchange chamber 3, 13 or 23 from side to side, can be spaced from the respective inlets 4 in order to define a combustion chamber 21 and to prevent their combustion caused by the flame generated by the corresponding burner 20, as shown in the variations of the heat exchangers 1a and 1b of Figures 8 and 15.

In order to obtain a further increase in the thermal efficiency of the heat exchangers 1a, 1b, 1c and 1d, the heat exchange elements 7 comprise solid pins 19, which are connected to the inside walls of the box-like body 2a, 2b, 2c and 2d, are interposed between the hollow pins 14, and run substantially parallel to the hollow pins 14.

In this manner, the combustion gases are forced to flow completely over both the hollow pins 14 and the solid pins 19, thus increasing the efficiency of the heat exchangers 1a, 1b, 1c and 1d.

For the same reason for which the hollow pins 14 are spaced from the respective inlet 4, the solid pins 19, which can also consist of a radially extended finning of the hollow pins 14, can have an axial extension that increases as it extends away from the respective inlet 4 until they cross the respective heat exchange chamber 3, 13 or 23 from side to side, so as to contribute to delimiting the combustion chamber 21 and to prevent their combustion caused by the flame generated by the respective burner 20.

Operation of the heat exchanger 1a, 1b, 1c and 1d is clear and evident from the foregoing description.

More precisely, by varying the number of additional modular elements 9a, 9b, 9c and 9d it is possible to vary the dimensions of the corresponding heat exchanger 1a, 1b, 1c or 1 d and, if provided, it is possible to vary the number of burners 20 with the corresponding heat exchange chambers 3, 13 and 23.

In practice it has been found that the heat exchangers with highly flexible use, according to the present invention, achieve the intended aim and objects, since they make it possible to adapt to any design context, i.e., by adapting to the dimensions and space occupations of the boilers and to the design specifications, thanks to the fact that they are provided in standardized modules.

In this manner it is possible to perform large-scale manufacture and at the same time, with the manufactured parts, provide heat exchangers to measure, with considerable economical saving with respect to the background art.

Another advantage of the heat exchangers according to the invention consists in that they have an assembly step which is simpler, faster and more intuitive than the background art, thanks to the presence of winding ducts which are obtained in each individual modular element and can be connected to each other.

A further advantage of the heat exchangers according to the invention consists in that they are structurally simple, reliable and safe in use.

Another advantage of the heat exchangers according to the invention consists in that, thanks to the shape of the hollow pins and of the solid pins, the volumes of the burned gases are optimized, since the passage of the gases through each heat exchange chamber is adequately obstructed.

A further advantage of the heat exchangers according to the invention consists in that there is greater freedom during the design phase as regards the placement and sizing of the hollow pins thanks to the presence of the solid pins, which can be placed where a void is created and which in any case contribute to the exchange of heat.

The invention thus conceived is susceptible of numerous modifications and variations, all of which are within the scope of the appended claims.

In practice, the materials used, so long as they are compatible with the specific use, as well as the contingent shapes and dimensions, may be any according to requirements.

Where technical features mentioned in any claim are followed by reference numerals and/or signs, those reference numerals and/or signs have been included for the sole purpose of increasing the intelligibility of the claims and accordingly such reference numerals and/or signs do not have any limiting effect on the interpretation of each element identified by way of example by such reference numerals and/or signs.

## Claims

1. A heat exchanger (1a, 1b, 1c, 1d) for highly flexible use, comprising a box-like body (2a, 2b, 2c, 2d) which delimits inside it at least one heat exchange chamber (3, 13, 23) and has at least one inlet (4) and at least one outlet (5) for the passage through said at least one heat exchange chamber (3, 13, 23) of combustion products along a preferred path, said box-like body (2a, 2b, 2c, 2d) defining at least partly in its side walls at least one duct for feeding a fluid to be heated and inside said at least one heat exchange chamber (3, 13, 23) heat exchange elements (7) being provided and being associated with said at least one supply duct in order to increase the thermal efficiency of said heat exchanger (1a, 1b, 1c, 1d), said heat exchanger further comprising a plurality of distinct modular elements (8a, 8b, 8c, 8d, 9a, 9b, 9c, 9d) which are mutually interconnected in order to define said box-like body (2a, 2b, 2c, 2d), each one of said modular elements (8a, 8b, 8c, 8d, 9a, 9b, 9c, 9d) comprising at least one portion of said heat exchange elements (7), at least one portion of said supply duct and at least one portion of said at least one heat exchange chamber (3, 13, 23), and said heat exchange elements (7) further comprising solid pins (19) which are connected to the inside walls of said box-like body (2a, 2b, 2c, 2d) and are interposed between said hollow pins (14) for a further increase in the thermal efficiency of said heat exchanger (1a, 1b, 1c, 1d), said solid pins (19) extending substantially parallel to said hollow pins (14), **characterized in that** said heat exchange elements (7) comprise hollow pins (14), which are arranged inside said at least one heat exchange chamber (3, 13, 23) and can be crossed internally by said fluid to be heated, said hollow pins (14) running parallel to each other and substantially at right angles to the direction of crossing of said combustion products in said at least one heat exchange chamber (3, 13, 23).

2. The heat exchanger (1a, 1b, 1d) according to claim 1, **characterized in that** said modular elements comprise two modular end elements (8a, 8b, 8d) which are distinct and associable.

3. The heat exchanger (1a, 1b, 1d) according to claim 2, **characterized in that** said modular elements comprise at least one additional modular element (9a, 9b, 9d), which is distinct and interposed between said two modular end elements (8a, 8b, 8d) or between one of said modular end elements (8a, 8b, 8d) and another additional modular element (9a, 9b, 9d) or between two other additional modular elements (9a, 9b, 9d).

4. The heat exchanger (1a, 1b, 1d) according to claim 3, **characterized in that** said modular end elements (8a, 8b, 8d) and said at least one additional modular element (9a, 9b, 9d) are each provided by two distinct and interconnected half-elements.

5. The heat exchanger (1c) according to claim 1, **characterized in that** said modular elements comprise a modular end element (8c) and at least one additional modular element (9c), which are distinct and mutually associable, said modular end element (8c) having a closed profile in order to delimit inside it a first heat exchange chamber (13) and said at least one additional modular element (9c) having an open profile with an open face (34) in order to delimit inside it a second heat exchange chamber (23) when associated with said modular end element (8c) or with another additional modular element (9c).

6. The heat exchanger (1b, 1c) according to claim 1, **characterized in that** it comprises a plurality of heat exchange chambers (3, 13, 23), one for each pair of said modular elements (8b, 8c, 9b, 9c), said heat exchange chambers (3, 13, 23) being independent of each other and being each delimited by said pair of modular elements (8b, 8c, 9b, 9c).

7. The heat exchanger (1b, 1c) according to claim 6, **characterized in that** it comprises a plurality of inlets (4) and one for each one of said heat exchange chambers (3, 13, 23).

8. The heat exchanger (1a, 1b, 1c, 1d) according to claim 7, **characterized in that** each one of said inlets (4) is designed to accommodate at least one burner (20).

9. The heat exchanger (1a, 1b, 1c, 1d) according to claim 1, **characterized in that** each one of said modular elements (8a, 8b, 8c, 8d, 9a, 9b, 9c, 9d) defines inside it a winding channel which runs substantially parallel to said direction of crossing, said winding channel comprising a plurality of straight portions (15) and of curved portions (16) which are mutually interleaved and formed respectively, by said hollow pins (14) and in said side walls of said box-like body (2a, 2b, 2c, 2d).

10. The heat exchanger (1a, 1b, 1c, 1d) according to claim 9, **characterized in that** each one of said winding channels is connected at one end to a delivery manifold (17) of said fluid to be heated and at the other end to a return manifold (18) of said fluid to be heated, each one of said delivery manifolds (17) and each one of said return manifolds (18) associated with the same one of said winding channels being defined by a single one of said modular elements (8a, 8b, 8c, 8d, 9a, 9b, 9c, 9d) and being connected respectively to the delivery manifold (17) and to the return manifold (18) of the adjacent modular element (8a, 8b, 8c, 8d, 9a, 9b, 9c, 9d), said portions (15, 16), said delivery manifolds (17) and said return manifolds (18) thus defining said supply duct.

11. The heat exchanger (1a, 1b, 1c, 1d) according to one or more of claims 9 to 10, **characterized in that** said hollow pins (14) cross said at least one heat exchange chamber (3, 13, 23) from side to side.

12. The heat exchanger (1a, 1b, 1d) according to claim 4 and according to one or more of claims 9 to 11, **characterized in that** each one of said winding channels is defined partly by one of said half-elements and partly by the other one of said half-elements.

13. The heat exchanger (1a, 1b) according to claim 8 and according to one or more of claims 9 to 12, **characterized in that** said hollow pins (14) are spaced from said inlets (4) in order to define a combustion chamber (21) and to prevent their combustion caused by the flame generated by said at least one burner (20).

14. The heat exchanger (1a, 1b) according to claims 8 and 13, **characterized in that** said solid pins (19) have an axial extension that increases as it extends away from said inlets (4) until they cross said at least one heat exchange chamber (3) from side to side in order to define said combustion chamber (21) and to prevent their combustion caused by the flame generated by said at least one burner (20).

15. A heat exchange station, **characterized in that** it comprises a plurality of heat exchangers (1d), according to one or more of the preceding claims, which are mutually arranged, said fluid to be heated passing through all of said heat exchangers (1d).

## Patentansprüche

1. Ein Wärmetauscher (1a, 1b, 1c, 1d) zur hochgradig flexiblen Verwendung, der einen kastenartigen Körper (2a, 2b, 2c, 2d) umfasst, welcher in seinem Inneren mindestens eine Wärmetauschkammer (3, 13, 23) begrenzt und mindestens einen Einlass (4) und mindestens einen Auslass (5) für das Hindurchströmen von Verbrennungsprodukten entlang einem bevorzugten Pfad durch die mindestens eine Wärmetauschkammer (3, 13, 23) hat, wobei der kastenartige Körper (2a, 2b, 2c, 2d) zumindest teilweise in seinen Seitenwänden mindestens eine Leitung zum Zuführen eines zu erhitzenden Fluids bestimmt und wobei in der mindestens einen Wärmetauschkammer (3, 13, 23) Wärmetauschelemente (7) bereitgestellt und mit der mindestens einen Versorgungsleitung verbunden sind, um den thermischen Wirkungsgrad des Wärmetauschers (1a, 1b, 1c, 1d) zu erhöhen, wobei der Wärmetauscher weiter eine Vielzahl separater modularer Elemente (8a, 8b, 8c, 8d, 9a, 9b, 9c, 9d) umfasst, welche miteinander verbunden sind, um den kastenartigen Körper (2a, 2b, 2c, 2d) zu bestimmen, wobei jedes der modularen Elemente (8a, 8b, 8c, 8d, 9a, 9b, 9c, 9d) mindestens einen Teil der Wärmetauschelemente (7), mindestens einen Teil der Versorgungsleitung und mindestens einen Teil der mindestens einen Wärmetauschkammer (3, 13, 23) umfasst,
und wobei die Wärmetauschelemente (7) weiter massive Stifte (19) umfassen, die mit den Innenwänden des kastenartigen Körpers (2a, 2b, 2c, 2d) verbunden und zur weiteren Erhöhung des thermischen Wirkungsgrads des Wärmetauschers (1a, 1b, 1c, 1d) zwischen den Hohlstiften (14) angeordnet sind, wobei die massiven Stifte (19) sich im Wesentlichen parallel zu den Hohlstiften (14) erstrecken, **dadurch gekennzeichnet, dass** die Wärmetauschelemente (7) Hohlstifte (14) umfassen, welche innerhalb der mindestens einen Wärmetauschkammer (3, 13, 23) angeordnet sind und innen von dem zu erhitzenden Fluid durchströmt werden können, wobei die Hohlstifte (14) sich parallel zueinander und im Wesentlichen in rechten Winkeln zur Durchströmungsrichtung der Verbrennungsprodukte in der mindestens einen Wärmetauschkammer (3, 13, 23) erstrecken.

2. Der Wärmetauscher (1a, 1b, 1d) gemäß Anspruch 1, **dadurch gekennzeichnet, dass** die modularen Elemente zwei modulare Endelemente (8a, 8b, 8d) umfassen, die separat und verbindbar sind.

3. Der Wärmetauscher (1a, 1b, 1d) gemäß Anspruch 2, **dadurch gekennzeichnet, dass** die modularen Elemente mindestens ein zusätzliches modulares Element (9a, 9b, 9d) umfassen, welches separat und zwischen den zwei modularen Endelementen (8a, 8b, 8d) oder zwischen einem der modularen Endelemente (8a, 8b, 8d) und einem anderen zusätzlichen modularen Element (9a, 9b, 9d) oder zwischen zwei anderen zusätzlichen modularen Elementen (9a, 9b, 9d) eingesetzt ist.

4. Der Wärmetauscher (1a, 1b, 1d) gemäß Anspruch 3, **dadurch gekennzeichnet, dass** die modularen Endelemente (8a, 8b, 8d) und das mindestens eine zusätzliche modulare Element (9a, 9b, 9d) jeweils von zwei separaten und miteinander verbundenen Halbelementen gebildet werden.

5. Der Wärmetauscher (1c) gemäß Anspruch 1, **dadurch gekennzeichnet, dass** die modularen Elemente ein modulares Endelement (8c) und mindestens ein zusätzliches modulares Element (9c) umfassen, die separat sind und miteinander verbunden werden können, wobei das modulare Endelement (8c) ein geschlossenes Profil hat, um in seinem Inneren eine erste Wärmetauschkammer (13) zu begrenzen, und wobei das mindestens eine zusätzliche modulare Element (9c) ein offenes Profil mit einer offenen Fläche (34) hat, um in seinem Inneren bei Verbindung mit dem modularen Endelement (8c) oder mit einem anderen zusätzlichen modularen Element (9c) eine zweite Wärmetauschkammer (23) zu begrenzen.

6. Der Wärmetauscher (1b, 1c) gemäß Anspruch 1, **dadurch gekennzeichnet, dass** er eine Vielzahl von Wärmetauschkammern (3, 13, 23), eine für jedes Paar der modularen Elemente (8b, 8c, 9b, 9c), umfasst, wobei die Wärmetauschkammern (3, 13, 23) voneinander unabhängig sind und jeweils von dem Paar modularer Elemente (8b, 8c, 9b, 9c) begrenzt werden.

7. Der Wärmetauscher (1b, 1c) gemäß Anspruch 6, **dadurch gekennzeichnet, dass** er eine Vielzahl von Einlässen (4) und einen für jede der Wärmetauschkammern (3, 13, 23) umfasst.

8. Der Wärmetauscher (1a, 1b, 1c, 1d) gemäß Anspruch 7, **dadurch gekennzeichnet, dass** jeder der Einlässe (4) konstruiert ist, um mindestens einen Brenner (20) aufzunehmen.

9. Der Wärmetauscher (1a, 1b, 1c, 1d) gemäß Anspruch 1, **dadurch gekennzeichnet, dass** jedes der modularen Elemente (8a, 8b, 8c, 8d, 9a, 9b, 9c, 9d) in seinem Inneren einen gewundenen Kanal bestimmt, der sich im Wesentlichen parallel zu der Durchquerungsrichtung erstreckt, wobei der gewundene Kanal eine Vielzahl gerader Abschnitte (15) und gekrümmter Abschnitte (16) umfasst, die miteinander verschachtelt sind und jeweils von den Hohlstiften (14) und in den Seitenwänden des kastenähnlichen Körpers (2a, 2b, 2c, 2d) geformt sind.

10. Der Wärmetauscher (1a, 1b, 1c, 1d) gemäß Anspruch 9, **dadurch gekennzeichnet, dass** jeder der gewundenen Kanäle an einem Ende mit einem Abgabeverteiler (17) für das zu erhitzende Fluid und am anderen Ende mit einem Rückführverteiler (18) für das zu erhitzende Fluid verbunden ist, wobei jeder der Abgabeverteiler (17) und jeder der Rückführverteiler (18), die mit demselben der gewundenen Kanäle verbunden sind, von einem einzigen der modularen Elemente (8a, 8b, 8c, 8d, 9a, 9b, 9c, 9d) bestimmt und jeweils mit dem Abgabeverteiler (17) und mit dem Rückführverteiler (18) des benachbarten modularen Elements (8a, 8b, 8c, 8d, 9a, 9b, 9c, 9d) verbunden sind, so dass die Abschnitte (15, 16), die Abgabeverteiler (17) und die Rückführverteiler (18) die Versorgungsleitung bestimmen.

11. Der Wärmetauscher (1a, 1b, 1c, 1d) gemäß einem oder mehreren der Ansprüche 9 bis 10, **dadurch gekennzeichnet, dass** die Hohlstifte (14) die mindestens eine Wärmetauschkammer (3, 13, 23) von einer Seite zur anderen durchqueren.

12. Der Wärmetauscher (1a, 1b, 1d) gemäß Anspruch 4 und gemäß einem oder mehreren der Ansprüche 9 bis 11, **dadurch gekennzeichnet, dass** jeder der gewundenen Kanäle teilweise von einem der Halbelemente und teilweise von dem anderen der Halbelemente bestimmt wird.

13. Der Wärmetauscher (1a, 1b) gemäß Anspruch 8 und gemäß einem oder mehreren der Ansprüche 9 bis 12, **dadurch gekennzeichnet, dass** die Hohlstifte (14) von den Einlässen (4) beabstandet sind, um einen Feuerraum (21) zu bestimmen und um ihre Verbrennung, die durch die von dem mindestens einen Brenner (20) erzeugte Flamme verursacht wird, zu verhindern.

14. Der Wärmetauscher (1a, 1b) gemäß den Ansprüchen 8 und 13, **dadurch gekennzeichnet, dass** die massiven Stifte (19) eine axiale Ausdehnung haben, die zunimmt, während sie sich von den Einlässen (4) fort erstreckt, bis sie die mindestens eine Wärmetauschkammer (3) von einer Seite zur anderen durchqueren, um den Feuerraum (21) zu bestimmen und um ihre Verbrennung, die durch die von dem mindestens einen Brenner (20) erzeugte Flamme verursacht wird, zu verhindern.

15. Eine Wärmetauschstation, **dadurch gekennzeichnet, dass** sie eine Vielzahl von Wärmetauschern (1d) gemäß einem oder mehreren der obigen Ansprüche umfasst, die gegenseitig angeordnet sind, wobei das zu erhitzende Fluid durch alle der Wärmetauscher (1d) strömt.

## Revendications

1. Echangeur de chaleur (1a, 1b, 1c, 1d) pour une utilisation très souple, comprenant un corps en forme de boîte (2a, 2b, 2c, 2d) qui délimite à l'intérieur de ce dernier, au moins une chambre d'échange de chaleur (3, 13, 23) et a au moins une entrée (4) et au moins une sortie (5) pour le passage à travers ladite au moins une chambre d'échange de chaleur (3, 13, 23) de produits de combustion le long d'une trajectoire préférée, ledit corps en forme de boîte (2a, 2b, 2c, 2d) définissant au moins partiellement, dans ses parois latérales, au moins un conduit pour alimenter un fluide à chauffer, et à l'intérieur de ladite au moins une chambre d'échange de chaleur (3, 13, 23), des éléments d'échange de chaleur (7) qui sont prévus et associés avec ledit au moins un conduit d'alimentation afin d'augmenter le rendement thermique dudit échangeur de chaleur (1a, 1b, 1c 1d), ledit échangeur de chaleur comprenant en outre une pluralité d'éléments modulaires distincts (8a, 8b, 8c, 8d, 9a, 9b, 9c, 9d) qui sont mutuellement interconnectés afin de définir ledit corps en forme de boîte (2a, 2b, 2c, 2d), chacun desdits éléments modulaires (8a, 8b, 8c, 8d, 9a, 9b, 9c, 9d) comprenant au moins une partie desdits éléments d'échange de chaleur (7), au moins une partie dudit conduit d'alimentation et au moins une partie de ladite au moins une chambre d'échange de chaleur (3, 13, 23), et lesdits éléments d'échange de chaleur (7) comprenant en outre des broches pleines (19) qui sont raccordées aux parois intérieures dudit corps en forme de boîte (2a, 2b, 2c, 2d) et sont intercalées entre lesdites broches creuses (14) pour une augmentation supplémentaire du rendement thermique dudit échangeur de chaleur (1a, 1b, 1c 1d), lesdites broches pleines (19) s'étendant sensiblement parallèlement auxdites broches creuses (14), **caractérisé en ce que** lesdits éléments d'échange de chaleur (7) comprennent des broches creuses (14) qui sont agencées à l'intérieur de ladite au moins une chambre d'échange thermique (3, 13, 23) et peuvent être traversées intérieurement par ledit fluide à chauffer, lesdites broches creuses (14) s'étendant parallèlement entre elles et sensiblement en angle droit par rapport à la direction de traversée desdits produits de combustion dans ladite au moins une chambre d'échange de chaleur (3, 13, 23).

2. Echangeur de chaleur (1a, 1b, 1d) selon la revendication 1, **caractérisé en ce que** lesdits éléments modulaires comprennent deux éléments d'extrémité modulaires (8a, 8b, 8d) qui sont distincts et peuvent être associés.

3. Echangeur de chaleur (1a, 1b, 1d) selon la revendication 2, **caractérisé en ce que** lesdits éléments modulaires comprennent au moins un élément modulaire supplémentaire (9a, 9b, 9d), qui est distinct et intercalé entre lesdits deux éléments d'extrémité modulaires (8a, 8b, 8d) ou entre l'un desdits éléments d'extrémité modulaires (8a, 8b, 8d) et un autre élément modulaire supplémentaire (9a, 9b, 9d) ou entre deux autres éléments modulaires supplémentaires (9a, 9b, 9d).

4. Echangeur de chaleur (1a, 1b, 1d) selon la revendication 3, **caractérisé en ce que** lesdits éléments d'extrémité modulaires (8a, 8b, 8d) et ledit au moins un élément modulaire supplémentaire (9a, 9b, 9d) sont chacun prévus par deux demi-éléments distincts et interconnectés.

5. Echangeur de chaleur (1c) selon la revendication 1, **caractérisé en ce que** lesdits éléments modulaires comprennent un élément d'extrémité modulaire (8c) et au moins un élément modulaire supplémentaire (9c), qui sont distincts et peuvent être mutuellement associés, ledit élément d'extrémité modulaire (8c) ayant un profil fermé afin de délimiter à l'intérieur de ce dernier une première chambre d'échange de chaleur (13) et ledit au moins un élément modulaire supplémentaire (9c) ayant un profil ouvert avec une face ouverte (34) afin de délimiter à l'intérieur de ce dernier une seconde chambre d'échange de chaleur (23) lorsqu'elle est associée audit élément d'extrémité modulaire (8c) ou avec un autre élément modulaire supplémentaire (9c).

6. Echangeur de chaleur (1b, 1c) selon la revendication 1, **caractérisé en ce qu'**il comprend une pluralité de chambres d'échange de chaleur (3, 13, 23), une pour chaque paire desdits éléments modulaires (8b, 8c, 9b, 9c), lesdites chambres d'échange de chaleur (3, 13, 23) étant indépendantes les unes des autres et étant chacune délimitées par ladite paire d'éléments modulaires (8b, 8c, 9b, 9c).

7. Echangeur de chaleur (1b, 1c) selon la revendication 6, **caractérisé en ce qu'**il comprend une pluralité d'entrées (4) et une pour chacune desdites chambres d'échange de chaleur (3, 13, 23).

8. Echangeur de chaleur (1a, 1b, 1c, 1d) selon la revendication 7, **caractérisé en ce que** chacune desdites entrées (4) est conçue pour loger au moins un brûleur (20).

9. Echangeur de chaleur (1a, 1b, 1c, 1d) selon la revendication 1, **caractérisé en ce que** chacun desdits éléments modulaires (8a, 8b, 8c, 8d, 9a, 9b, 9c, 9d) définit, à l'intérieur de ce dernier, un canal d'enroulement qui s'étend sensiblement parallèlement à ladite direction de traversée, ledit canal d'enroulement comprenant une pluralité de parties droites (15) et de parties incurvées (16) qui sont mutuellement entrelacées et respectivement formées par lesdites broches creuses (14) et dans lesdites parois latérales dudit corps en forme de boîte (2a, 2b, 2c, 2d).

10. Echangeur de chaleur (1a, 1b, 1c, 1d) selon la revendication 9, **caractérisé en ce que** chacun desdits canaux d'enroulement est raccordé, au niveau d'une extrémité, à un collecteur de distribution (17) dudit fluide à chauffer et au niveau de l'autre extrémité, à un collecteur de retour (18) dudit fluide à chauffer, chacun desdits collecteurs de distribution (17) et chacun desdits collecteurs de retour (18) associés avec le même desdits canaux d'enroulement, étant définis par un seul desdits éléments modulaires (8a, 8b, 8c, 8d, 9a, 9b, 9c, 9d) et étant raccordés respectivement au collecteur de distribution (17) et au collecteur de retour (18) de l'élément modulaire (8a, 8b, 8c, 8d, 9a, 9b, 9c, 9d) adjacent, lesdites parties (15, 16), lesdits collecteurs de distribution (17) et lesdits collecteurs de retour (18) définissant ainsi ledit conduit d'alimentation.

11. Echangeur de chaleur (1a, 1b, 1c, 1d) selon une ou plusieurs des revendications 9 à 10, **caractérisé en ce que** lesdites broches creuses (14) traversent ladite au moins une chambre d'échange de chaleur (3, 13, 23) d'un côté à l'autre.

12. Echangeur de chaleur (1a, 1b, 1d) selon la revendication 4 et selon une ou plusieurs des revendications 9 à 11, **caractérisé en ce que** chacun desdits canaux d'enroulement est défini partiellement par l'un desdits demi-éléments et partiellement par l'autre desdits demi-éléments.

13. Echangeur de chaleur (1a, 1b) selon la revendication 8 et selon une ou plusieurs des revendications 9 à 12, **caractérisé en ce que** lesdites broches creuses (14) sont espacées desdites entrées (4) afin de définir une chambre de combustion (21) et d'empêcher leur combustion provoquée par la flamme générée par ledit au moins un brûleur (20).

14. Echangeur de chaleur (1a, 1b) selon les revendications 8 et 13, **caractérisé en ce que** lesdites broches pleines (19) ont une extension axiale qui augmente au fur et à mesure qu'elle s'étend à distance des entrées (4) jusqu'à ce qu'elles traversent ladite au moins une chambre d'échange de chaleur (3) d'un côté à l'autre afin de définir ladite chambre de combustion (21) et d'empêcher leur combustion provoquée par la flamme générée par ledit au moins un brûleur (20).

15. Station d'échange de chaleur **caractérisée en ce qu'**elle comprend une pluralité d'échangeurs de chaleur (1d) selon une ou plusieurs des revendications précédentes, qui sont mutuellement agencés, ledit fluide à chauffer passant par tous lesdits échangeurs de chaleur (1d).
